# FASCICULE DE BREVET EUROPEEN

(11) **EP 2 771 174 B1**
(45) Date de publication et mention de la délivrance du brevet: **16.12.2015**
(21) Numéro de dépôt: 12791518.9
(22) Date de dépôt: 17.10.2012
(51) Int. Cl.: B29C 70/44, B29C 33/30, F02C 7/04, B29C 43/36, B29L 31/00, F01D 25/28, B29C 43/32

(54) **MANDRIN D'IMPREGNATION A BACHE VIDE POUR LA FABRICATION D'UN CARTER DE TURBINE A GAZ EN MATERIAU COMPOSITE**
IMPRÄGNIERUNGSDORN MIT EINEM VAKUUMBEUTEL ZUR HERSTELLUNG EINES GASTURBINENGEHÄUSES AUS VERBUNDWERKSTOFF
IMPREGNATION MANDREL COMPRISING A VACUUM BAG FOR THE PRODUCTION OF A GAS TURBINE CASING FROM COMPOSITE MATERIAL

(30) Priorité: 26.10.2011 US 201161551544 P
(43) Date de publication de la demande: 03.09.2014
(73) Titulaire: Snecma, 75015 Paris (FR)
(72) Inventeur: MATHON, Richard, 91800 Brunoy (FR); PATRIGEON, Olivier, F-92000 Nanterre (FR); BETTEGA, Louis, F-57220 Boucheporn (FR)
(74) Mandataire: Boura, Olivier
(86) Numéro de dépôt international: PCT/FR2012/052367
(87) Numéro de publication internationale: WO 2013/060966

(56) Documents cités:
- WO-A1-2006/064167
- FR-A1- 2 879 497
- FR-A1- 2 958 875
- GB-A- 2 243 104
- US-A- 5 597 435

## Description

### Arrière-plan de l'invention

La présente invention se rapporte au domaine général des carters de turbine à gaz, et plus particulièrement des carters de rétention pour soufflante de turbine à gaz pour moteurs aéronautiques.

Dans un moteur aéronautique à turbine à gaz, un carter de soufflante remplit plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Selon cette invention, la texture fibreuse est réalisée par tissage tridimensionnel avec épaisseur évolutive et est enroulée en plusieurs couches superposées sur un mandrin ayant une paroi centrale de profil correspondant à celui du carter à fabriquer et deux flasques latéraux de profil correspondant à ceux des brides externes du carter. La préforme fibreuse ainsi obtenue est maintenue sur le mandrin et une imprégnation par résine est réalisée sous vide avant polymérisation. L'enroulement sur un mandrin d'une texture tissée d'épaisseur évolutive comme décrit dans ce document permet de disposer directement d'une préforme tubulaire ayant le profil désiré avec épaisseur variable.

En pratique, l'étape d'imprégnation par la résine réalisée sous vide nécessite d'appliquer une enveloppe souple (ou bâche) sur tout le renfort fibreux, et notamment au niveau des brides du renfort qui formeront ultérieurement les brides externes du carter. Une différence de pression est ensuite établie entre l'extérieur et l'espace délimité par le mandrin et la bâche dans lequel se trouve le renfort fibreux. L'injection de résine dans cet espace peut alors débuter. On pourra se référer au document FR 2,879,497 qui divulgue un mandrin d'impregnation conformément au préamble de la revendication 1.

Au cours de cette étape, il a été constaté que l'établissement du vide d'air a tendance à générer une mise en tension des couches de texture fibreuse positionnées au niveau des angles de brides entre les flasques et la paroi centrale du mandrin, cette mise en tension provoquant un décollement des tissus à l'origine de défauts de compactage et d'amas de résine entre les couches.

### Objet et résumé de l'invention

La présente invention a donc pour but principal de pallier de tels inconvénients en proposant une solution pour l'imprégnation par bâche à vidé permettant d'assurer un compactage uniforme du renfort fibreux, notamment au niveau des angles de brides.

Ce but est atteint grâce à un mandrin d'imprégnation pour la fabrication d'un carter de turbine à gaz en matériau composite, comprenant :
un mandrin d'imprégnation sur lequel est destiné à être maintenu un renfort fibreux formé par des couches superposées d'une texture fibreuse, le mandrin comportant une paroi annulaire centrale dont le profil correspond à celui du carter à fabriquer et deux flasques latéraux dont les profils correspondent à ceux de brides externes du carter à fabriquer ;
des barrettes de compactage comprenant chacune un coin destiné à être mis en appui contre la partie du renfort fibreux recouvrant les angles formés entre la paroi centrale et les flasques du mandrin, et une bride de fixation destinée à être fixée sur le flasque correspondant du mandrin ;
une enveloppe souple formant bâche à vide destinée à être appliquée au moins sur la partie du renfort fibreux recouvrant la paroi centrale du mandrin ; et
des moyens pour injecter de la résine dans un espace délimité entre la bâche à vide et le mandrin au niveau d'une extrémité longitudinale du renfort fibreux et pour l'extraire au niveau d'une extrémité opposée.

Les barrettes de compactage du mandrin selon l'invention sont positionnées une fois l'opération d'enroulement terminée et avant la mise en place de la bâche à vide. Ces barrettes de compactage permettent ainsi d'assurer un compactage uniforme de la partie du renfort fibreux recouvrant les angles de brides préalablement à l'établissement du vide d'air. De la sorte, tout risque de formation d'amas de résine entre les couches du renfort fibreux au cours de cette opération d'établissement du vide peut être évité.

De plus, les barrettes de compactage sont destinées à être fixées directement sur le mandrin d'imprégnation, ce qui permet de maîtriser parfaitement et de façon répétitive la géométrie des brides externes du carter à fabriquer.

De préférence, le mandrin comprend au moins un orifice d'injection de résine débouchant à l'intérieur de l'espace délimité entre la bâche à vide et le mandrin au niveau d'une extrémité longitudinale du renfort fibreux, et au moins un orifice d'extraction de la résine disposé au niveau de l'extrémité longitudinale du renfort fibreux opposée à celle dans laquelle débouche l'orifice d'injection de résine.

Dans ce cas, l'orifice d'injection de résine peut être formé dans l'un des flasques du mandrin et l'orifice d'extraction de résine être formé dans l'autre flasque. De façon avantageuse, l'orifice d'injection de résine débouche alors au niveau du coin d'une barrette de compactage dite d'injection, tandis que l'orifice d'extraction de résine débouche en aval des barrettes de compactage opposées dites d'extraction.

Les brides de fixation des barrettes de compactage d'extraction peuvent comporter des rainures permettant d'assurer un passage de la résine.

La bâche à vide peut être destinée à être également appliquée sur les barrettes de compactage et à être fixée de façon étanche à ses extrémités libres sur les flasques du mandrin.

Les brides de fixation des barrettes de compactage sont de préférence destinées à être fixées de façon étanche sur les flasques du mandrin.

Pour chaque flasque du mandrin, les barrettes de compactage peuvent être au nombre de quatre et être mises bout à bout angulairement pour couvrir la circonférence totale du mandrin.

L'invention a également pour objet une machine d'enroulement d'une texture fibreuse sur un mandrin d'imprégnation, comprenant un mandrin d'appel sur lequel est destiné à être stockée une texture fibreuse obtenue par tissage tridimensionnel, le mandrin d'appel ayant un axe de rotation sensiblement horizontal, un mandrin d'imprégnation tel que défini précédemment, le mandrin d'imprégnation ayant un axe de rotation sensiblement horizontal et parallèle à l'axe de rotation du mandrin d'appel, des moteurs électriques pour entraîner en rotation les mandrins autour de leur axe de rotation respectif, et une unité de commande des moteurs électriques d'entraînement en rotation des mandrins.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et de côté d'une machine d'enroulement d'une texture fibreuse sur un mandrin d'imprégnation conforme à l'invention ;
- la figure 2 est une vue du mandrin d'imprégnation de la machine d'enroulement de la figure 1 lors de la mise en place des barrettes de compactage ;
- la figure 3 est une vue en coupe selon III-III de la figure 2 ; et
- la figure 4 est une vue en coupe du mandrin d'imprégnation de la figure 3 après mise en place de la bâche à vide.

### Description détaillée de l'invention

L'invention sera décrite ci-après dans le cadre de son application à la fabrication d'un carter de soufflante de moteur aéronautique à turbine à gaz.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer.

La texture fibreuse ainsi réalisée est ensuite transférée sur le mandrin d'un moule d'injection de résine (ci-après appelé mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe souple (également appelée bâche à vide) est appliquée de façon étanche sur la préforme et la résine est injectée dans le moule ainsi constitué. L'imprégnation est assistée par établissement d'une différence de pression entre l'extérieur et l'intérieur du moule dans lequel se trouve la préforme (on parle de vide d'air). Après imprégnation, une étape de polymérisation de la résine est réalisée.

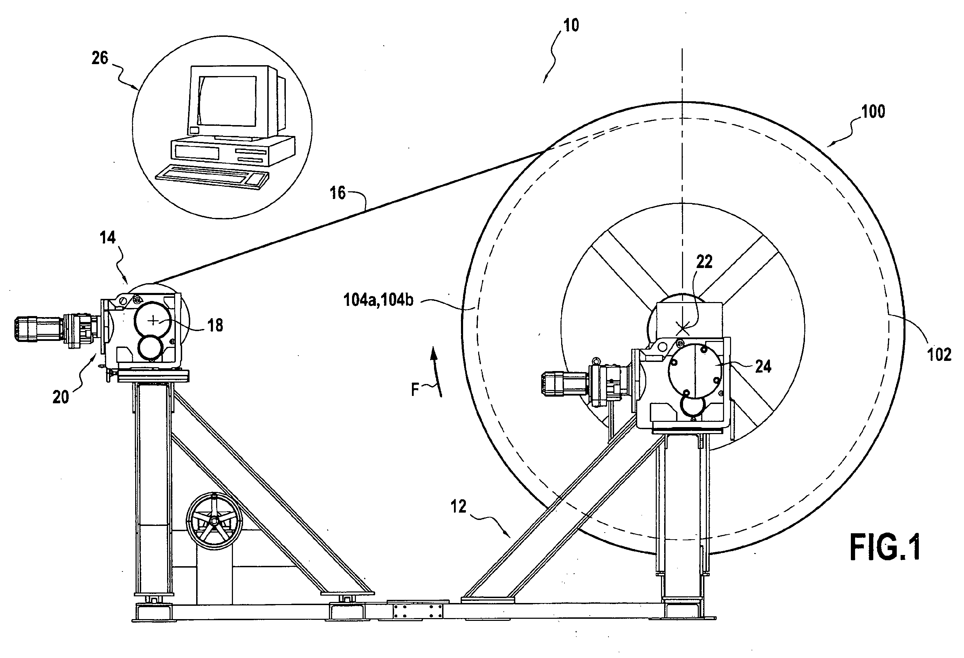

L'invention s'applique à tout type de machine d'enroulement ayant pour fonction de permettre un transfert automatisé de la texture fibreuse stockée sur le mandrin d'appel vers le mandrin d'imprégnation du moule d'injection de résine, telle que celle représentée sur la figure 1.

On pourra se référer à la demande de brevet FR 11 53212 (non publiée à ce jour) qui décrit en détails la structure et le fonctionnement d'une telle machine.

Brièvement, la machine d'enroulement 10 comprend un bâti 12 supportant notamment un mandrin d'appel 14 et un mandrin d'imprégnation 100 conforme à l'invention. Ces mandrins sont amovibles, c'est-à-dire qu'ils peuvent être démontés du bâti.

Le mandrin d'appel 14 reçoit la texture fibreuse 16 obtenue par exemple par tissage tridimensionnel. Il est porté par un axe horizontal 18 dont une extrémité est montée de façon rotative sur le bâti 12 de la machine d'enroulement et l'autre extrémité est couplée à l'arbre de sortie d'un moteur électrique 20, par exemple un motoréducteur électrique à courant alternatif.

L'ensemble constitué du mandrin d'appel 14, de son axe 18 et de son moteur électrique 20 peuvent translater par rapport au bâti le long de l'axe de rotation du mandrin d'appel. Ce degré de liberté en translation du mandrin d'appel permet de réaliser un alignement de ce mandrin sur le mandrin d'imprégnation préalablement à l'enroulement de la texture fibreuse sur le mandrin d'imprégnation.

Le mandrin d'imprégnation 100 de la machine d'enroulement est destiné à recevoir en couches superposées la texture fibreuse stockée sur le mandrin d'appel. De façon connue en soi, il présente une paroi annulaire centrale 102 dont le profil de la surface extérieure correspond à celui de la surface interne du carter à réaliser et deux flasques latéraux 104a, 104b dont les profils correspondent à ceux des brides externes du carter à ses extrémités amont et aval afin de permettre son montage et sa liaison avec d'autres éléments.

Le mandrin d'imprégnation est porté par un axe horizontal 22 qui est parallèle à l'axe de rotation 18 du mandrin d'appel et dont l'une extrémité est montée de façon rotative sur le bâti 12 de la machine d'enroulement et l'autre extrémité est couplée à l'arbre de sortie d'un moteur électrique 24, par exemple un motoréducteur électrique à courant alternatif.

Une unité de commande 26 est reliée aux moteurs électriques 20, 24 des deux mandrins et permet de commander et contrôler de la vitesse de rotation de chaque mandrin. De manière plus générale, cette unité de commande permet de piloter l'ensemble des paramètres de fonctionnement de la machine d'enroulement, et notamment le déplacement en translation du mandrin d'appel lorsque celui-ci est motorisé.

Avec une telle machine, l'enroulement de la texture fibreuse sur le mandrin d'imprégnation s'effectue de la façon suivante : l'extrémité libre de la texture fibreuse du mandrin d'appel est d'abord fixée sur le mandrin d'imprégnation au moyen d'un dispositif de maintien par pincement décrit ci-après, puis les moteurs d'entraînement en rotation des mandrins sont activés et pilotés par l'unité de commande de façon à appliquer une tension d'enroulement adéquate sur la texture fibreuse.

L'enroulement de la texture fibreuse en couches superposées sur le mandrin d'imprégnation peut alors débuter et s'effectue selon le sens de rotation repéré par la flèche F sur la figure 1. A titre d'exemple, il pourra être nécessaire de réaliser 4 tours 1/8 pour obtenir un renfort fibreux 28 ayant une épaisseur conforme aux spécifications du carter à fabriquer.

Selon l'invention, le mandrin d'imprégnation 100 est pourvu de moyens permettant d'assurer une imprégnation par résine sous bâche à vide à la fin de l'opération d'enroulement.

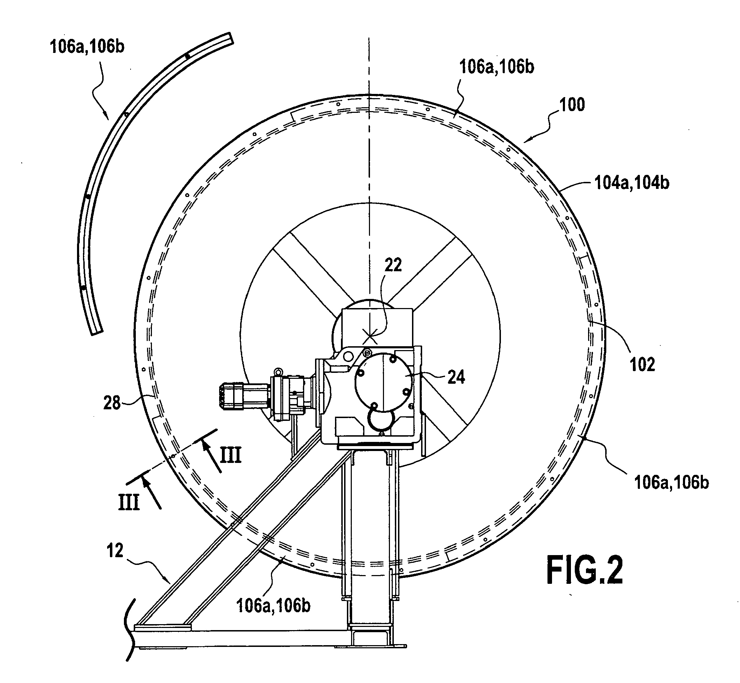

Plus précisément, comme représenté sur les figures 2 à 4, le mandrin d'imprégnation comprend des barrettes angulaires dite de compactage qui sont destinées à être positionnées sur le mandrin au niveau des parties du renfort fibreux 28 recouvrant les angles formés entre la paroi centrale 102 et les flasques 104a, 104b de celui-ci.

Ces barrettes se composent d'une première série de barrettes de compactage 106a destinées à être montées contre la partie du renfort fibreux recouvrant l'angle formé entre la paroi centrale du mandrin et le flasque 104a, et d'une seconde série de barrettes de compactage 106b destinées à être montées contre la partie du renfort fibreux recouvrant l'angle formé entre la paroi centrale du mandrin et l'autre flasque 104b.

Les barrettes de compactage 106a, 106b de ces séries recouvrent l'ensemble de la circonférence du mandrin et sont sectorisées. Ainsi, dans l'exemple illustré sur la figure 2, chaque série se compose de quatre barrettes de compactage s'étendant chacune sur 90° environ et mises bout à bout angulairement pour couvrir la circonférence totale du mandrin d'imprégnation. Bien entendu, le nombre de barrettes par série pourrait être différent.

Chaque barrette de compactage 106a, 106b comprend un coin 108a, 108b qui est destiné à être mis en appui contre la partie du renfort fibreux recouvrant les angles formés entre la paroi centrale 102 et les flasques 104a, 104b du mandrin, et une bride de fixation 110a, 110b destinée à être fixée sur le flasque correspondant du mandrin.

La mise en place des barrettes de compactage sur le mandrin d'imprégnation permet d'assurer un compactage uniforme du renfort fibreux au niveau des angles de brides. Cette mise en place peut être assurée au moyen d'un outil spécifique de type serre-joint par exemple.

Une fois en place, les barrettes de compactage sont fixées sur le mandrin d'imprégnation par l'intermédiaire de leurs brides de fixation 110a, 110b et au moyen par exemple de vis 112. Cette fixation est rendue étanche grâce à la présence de joints toriques 114 positionnés contre une face interne des brides de fixation autour des alésages percés pour le passage des vis et de bouchons 116 venant étancher les ouvertures pratiquées dans les brides de fixation pour le passage de ces mêmes vis.

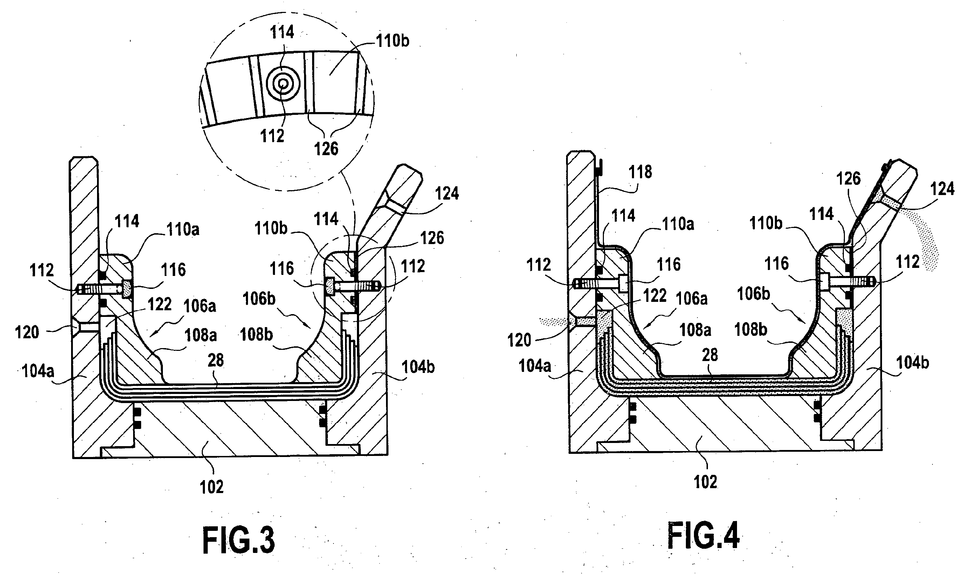

Une enveloppe souple 118 formant bâche à vide est ensuite appliquée au moins sur la partie du renfort fibreux recouvrant la paroi centrale du mandrin. De préférence, comme représenté sur la figure 4, cette bâche à vide 118 est appliquée à la fois sur le renfort fibreux au niveau de la partie centrale du mandrin, mais recouvre également les barrettes de compactage 106a, 106b pour venir, au niveau de ses extrémités libres, se fixer de façon étanche sur les flasques 104a, 104b du mandrin. Le matériau utilisé pour réaliser la bâche à vide 118 est par exemple du nylon (le choix du matériau dépendra notamment de la classe de température de la résine).

Le mandrin d'imprégnation comprend encore des moyens pour injecter de la résine dans le moule ainsi formé. A cet effet, l'un des flasques du mandrin (ici le flasque 104a) comprend au moins un orifice d'injection de résine 120 qui débouche à l'intérieur d'un espace 122 délimité entre le coin 108a d'une barrette de compactage 106a correspondante (aussi appelée « barrette de compactage d'injection ») et le flasque 104a correspondant. Ainsi, l'injection de résine s'effectue au niveau de l'une des extrémités libres du renfort fibreux 28 maintenu sur le mandrin.

L'extraction de la résine s'effectue au niveau du flasque opposé (à savoir ici le flasque 104b). A cet effet, ce flasque comprend un ou plusieurs orifices d'extraction 124 qui débouchent dans un espace délimité entre l'extrémité libre opposée de la bâche à vide 118 et le flasque 104b, cet espace étant situé en aval des barrettes de compactage 106b correspondantes (aussi appelées « barrettes de compactage d'extraction »). Par aval, on entend ici par rapport à l'écoulement de la résine entre les deux extrémités longitudinales du renfort fibreux maintenu sur le mandrin.

Pour permettre le passage de la résine depuis le renfort fibreux 28 vers le ou les orifices d'extraction 124, il est nécessaire qu'elle franchisse les barrettes de compactage d'extraction 106b. Aussi, les brides de fixation 110b de celles-ci présentent, au niveau de leur face interne, une pluralité de rainures 126 (voir la figure 3) s'étendant radialement vers l'extérieur et dimensionnées pour permettre un tel passage de résine.

Par ailleurs, on notera que le ou les orifices d'extraction peuvent être utilisés pour établir la mise sous vide d'air de la bâche 118 en créant une différence de pression entre l'extérieur et l'espace délimité par le mandrin et la bâche dans lequel se trouve le renfort fibreux. A cet effet, il pourra être nécessaire de disposer un tissu de drainage de vide entre la bâche à vide et le flasque 104b du mandrin dans sa partie en aval des barrettes de compactage d'extraction 106b (un tel tissu permet d'éviter une discontinuité du vide d'air jusqu'aux orifices d'extraction). La mise sous vide permet d'assister l'opération d'injection de résine.

Une fois le vide établi, la résine est injectée dans le moule ainsi formé par le mandrin d'imprégnation recouvert de la bâche à vide. Cette opération achevée, une étape de polymérisation de la résine est réalisée comme connue en soi.

## Revendications

1. Mandrin d'imprégnation pour la fabrication d'un carter de turbine à gaz en matériau composite, comprenant :
un mandrin d'imprégnation (100) sur lequel est destiné à être maintenu un renfort fibreux (28) formé par des couches superposées d'une texture fibreuse, le mandrin comportant une paroi annulaire centrale (102) dont le profil correspond à celui du carter à fabriquer et deux flasques latéraux (104a, 104b) dont les profils correspondent à ceux de brides externes du carter à fabriquer ;
des barrettes de compactage (106a, 106b) comprenant chacune un coin (108a, 108b) destiné à être mis en appui contre la partie du renfort fibreux recouvrant les angles formés entre la paroi centrale et les flasques du mandrin, et une bride de fixation (110a, 110b) destinée à être fixée sur le flasque correspondant du mandrin ;
une enveloppe souple (118) formant bâche à vide destinée à être appliquée au moins sur la partie du renfort fibreux recouvrant la paroi centrale du mandrin ; **caractérisé en ce que** le mandrin comprend également
des moyens (120, 124) pour injecter de la résine dans un espace (122) délimité entre la bâche à vide et le mandrin au niveau d'une extrémité longitudinale du renfort fibreux et pour l'extraire au niveau d'une extrémité opposée.

2. Mandrin selon la revendication 1, comprenant au moins un orifice d'injection de résine (120) débouchant à l'intérieur de l'espace délimité entre la bâche à vide et le mandrin au niveau d'une extrémité longitudinale du renfort fibreux, et au moins un orifice d'extraction de la résine (124) disposé au niveau de l'extrémité longitudinale du renfort fibreux opposée à celle dans laquelle débouche l'orifice d'injection de résine.

3. Mandrin selon la revendication 2, dans lequel l'orifice d'injection de résine (120) est formé dans l'un des flasques (104a) du mandrin et l'orifice d'extraction de résine (124) est formé dans l'autre flasque (104b).

4. Mandrin selon la revendication 3, dans lequel l'orifice d'injection de résine (120) débouche au niveau du coin (108a) d'une barrette de compactage dite d'injection (106a), tandis que l'orifice d'extraction de résine (124) débouche en aval des barrettes de compactage opposées dites d'extraction (106b).

5. Mandrin selon la revendication 4, dans lequel les brides de fixation (110b) des barrettes de compactage d'extraction (106b) comportent des rainures (126) permettant d'assurer un passage de la résine.

6. Mandrin selon l'une quelconque des revendications 1 à 5, dans lequel dans lequel la bâche à vide (118) est destinée à être également appliquée sur les barrettes de compactage (106a, 106b) et à être fixée de façon étanche à ses extrémités libres sur les flasques du mandrin.

7. Mandrin selon l'une quelconque des revendications 1 à 6, dans lequel les brides de fixation (110a, 110b) des barrettes de compactage (106a, 106b) sont destinées à être fixées de façon étanche sur les flasques du mandrin.

8. Mandrin selon l'une quelconque des revendications 1 à 7, dans lequel, pour chaque flasque du mandrin, les barrettes de compactage sont au nombre de quatre et sont mises bout à bout angulairement pour couvrir la circonférence totale du mandrin.

9. Machine d'enroulement (10) d'une texture fibreuse sur un mandrin d'imprégnation, comprenant :
un mandrin d'appel (14) sur lequel est destiné à être stockée une texture fibreuse (16) obtenue par tissage tridimensionnel, le mandrin d'appel ayant un axe de rotation (18) sensiblement horizontal ;
un mandrin d'imprégnation (100) selon l'une quelconque des revendications 1 à 8, le mandrin d'imprégnation ayant un axe de rotation (22) sensiblement horizontal et parallèle à l'axe de rotation du mandrin d'appel;
des moteurs électriques (20, 24) pour entraîner en rotation les mandrins autour de leur axe de rotation respectif ; et
une unité de commande (26) des moteurs électriques d'entraînement en rotation des mandrins.

## Patentansprüche

1. Imprägnierungsdorn für die Herstellung eines Gasturbinengehäuses aus Verbundwerkstoff, umfassend:
einen Imprägnierungsdorn (100), der dazu bestimmt ist, darauf eine durch übereinander angeordnete Lagen einer Faserstruktur gebildete Faserverstärkung (28) zu halten, wobei der Dorn eine mittlere ringförmige Wand (102), deren Profil demjenigen des herzustellenden Gehäuses entspricht, und zwei Seitenflansche (104a, 104b), deren Profile denjenigen von Außenflanschen des herzustellenden Gehäuses entsprechen, umfasst,
Kompaktierleisten (106a, 106b), die jeweils einen Keil (108a, 108b), welcher dazu bestimmt ist, an dem Teil der Faserverstärkung in Anlage gebracht zu werden, der die zwischen der mittleren Wand und den Flanschen des Dorns gebildeten Ecken bedeckt, sowie einen Befestigungsflansch (110a, 110b), welcher dazu bestimmt ist, an dem entsprechenden Flansch des Dorns befestigt zu werden, aufweisen,
eine eine Vakuumplane bildende flexible Hülle (118), die dazu bestimmt ist, wenigstens an den Teil der Faserverstärkung angelegt zu werden, der die mittlere Wand des Dorns bedeckt,
**dadurch gekennzeichnet, dass** der Dorn auch Mittel (120, 124) zum Einspritzen von Harz in einen zwischen der Vakuumplane und dem Dorn begrenzten Raum (122) im Bereich eines Längsendes der Faserverstärkung und zum Abführen dessen im Bereich eines gegenüberliegenden Endes umfasst.

2. Dorn nach Anspruch 1, umfassend wenigstens eine Harzeinspritzöffnung (120), die in das Innere des zwischen der Vakuumplane und dem Dorn begrenzten Raums im Bereich eines Längsendes der Faserverstärkung mündet, sowie wenigstens eine Öffnung zum Abführen des Harzes (124), die im Bereich des Längsendes der Faserverstärkung, das demjenigen, in das die Harzeinspritzöffnung mündet, gegenüberliegt, angeordnet ist.

3. Dorn nach Anspruch 2, bei dem die Harzeinspritzöffnung (120) in einem der Flansche (104a) des Dorns ausgebildet ist und die Harzabführöffnung (124) in dem anderen Flansch (104b) ausgebildet ist.

4. Dorn nach Anspruch 3, bei dem die Harzeinspritzöffnung (120) im Bereich des Keils (108a) einer sogenannten Einspritzkompaktierleiste (106a) einmündet, während die Harzabführöffnung (124) nach den gegenüberliegenden, sogenannten Abführkompaktierleisten (106b) ausmündet.

5. Dorn nach Anspruch 4, bei dem die Befestigungsflansche (110b) der Abführkompaktierleisten (106b) Nuten (126) umfassen, die ermöglichen, einen Durchgang des Harzes sicherzustellen.

6. Dorn nach einem der Ansprüche 1 bis 5, bei dem die Vakuumplane (118) dazu bestimmt ist, auch an die Kompaktierleisten (106a, 106b) angelegt zu werden und an ihren freien Enden an den Flanschen des Dorns dicht befestigt zu werden.

7. Dorn nach einem der Ansprüche 1 bis 6, bei dem die Befestigungsflansche (110a, 110b) der Kompaktierleisten (106a, 106b) dazu bestimmt sind, an den Flanschen des Dorns dicht befestigt zu werden.

8. Dorn nach einem der Ansprüche 1 bis 7, bei dem für jeden Flansch des Dorns vier Kompaktierleisten vorhanden sind und winkelig aneinander gesetzt sind, um den gesamten Umfang des Dorns abzudecken.

9. Maschine zum Aufwickeln (10) einer Faserstruktur auf einen Imprägnierungsdorn, umfassend:
einen Entnahmedorn (14), der dazu bestimmt ist, darauf eine durch dreidimensionales Weben erhaltene Faserstruktur (16) zu lagern, wobei der Entnahmedorn eine im Wesentlichen horizontale Rotationsachse (18) umfasst,
einen Imprägnierungsdorn (100) nach einem der Ansprüche 1 bis 8, wobei der Imprägnierungsdorn eine Rotationsachse (22), die im Wesentlichen horizontal ist und zu der Rotationsachse des Entnahmedorns parallel verläuft, aufweist,
Elektromotoren (20, 24), um die Dorne um ihre jeweilige Rotationsachse drehanzutreiben, und
eine Einheit zur Steuerung (26) der Elektromotoren für den Drehantrieb der Dorne.

## Claims

1. An impregnation mandrel for making a gas turbine casing made of composite material, comprising:
an impregnation mandrel (100) on which a fibrous reinforcement (28) is intended to be held, formed by superposed layers of a fibrous texture, the mandrel comprising a central annular wall (102) whereof the profile corresponds to that of the casing to be manufactured and two lateral flanges (104a, 104b) the profiles of which correspond to those of external flanges of the casing to be manufactured;
compaction bars (106a, 106b) each comprising a corner (108a, 108b) intended to be supported against the part of the fibrous reinforcement covering the angles formed between the central wall and the flanges of the mandrel, and a coupling flange (110a, 110b) intended to be fixed on the corresponding flange of the mandrel;
a supple envelope (118) forming a vacuum liner intended to be applied at least on that part of the fibrous reinforcement covering the central wall of the mandrel;
**characterized in that** the mandrel further comprises means (120, 124) for injecting resin into a space (122) delimited between the vacuum liner and the mandrel at a longitudinal end of the fibrous reinforcement and for extracting it at an opposite end.

2. The mandrel according to Claim 1, comprising at least one resin injection orifice (120) terminating inside the delimited space between the vacuum liner and the mandrel at a longitudinal end of the fibrous reinforcement, and at least one resin extraction orifice (124) placed at the longitudinal end of the fibrous reinforcement opposite to where the resin injection orifice terminates.

3. The mandrel according to Claim 2, wherein the resin injection orifice (120) is formed in one of the flanges (104a) of the mandrel and the resin extraction orifice (124) is formed in the other flange (104b).

4. The mandrel according to in Claim 3, wherein the resin injection orifice (120) terminates at the corner (108a) of a so-called injection compaction bar (106a), whereas the resin extraction orifice (124) terminates downstream of said opposite extraction compaction bars (106b).

5. The mandrel according to in Claim 4, wherein the coupling flanges (110b) of the extraction compaction bars (106b) comprise grooves (126) ensuring passage of the resin.

6. The mandrel according to any one of Claims 1 to 5, wherein in which the vacuum liner (118) is intended to be also applied to the compaction bars (106a, 106b) and be fixed tightly by its free ends to the flanges of the mandrel.

7. The mandrel according to any one of Claims 1 to 6, wherein the coupling flanges (110a, 110b) of the compaction bars (106a, 106b) are intended to be fixed tightly on the flanges of the mandrel.

8. The mandrel according to any one of Claims 1 to 7, wherein for each flange of the mandrel, there are four compaction bars that are put end to end angularly to cover the total circumference of the mandrel.

9. A winding machine (10) of a fibrous texture on an impregnation mandrel, comprising:
a take-up mandrel (14) on which a fibrous texture (16) is intended to be stored, produced by three-dimensional weaving, the take-up mandrel having a substantially horizontal axis of rotation (18);
an impregnation mandrel (100) according to any one of Claims 1 to 8, the impregnation mandrel having a substantially horizontal axis of rotation (22) parallel to the axis of rotation of the take-up mandrel;
electric motors (20, 24) for driving the mandrels in rotation about their respective axis of rotation; and
a control unit (26) of the electric motors for driving the mandrels in rotation.
